# EUROPEAN PATENT SPECIFICATION

(11) **EP 1 513 715 B1**
(45) Date of publication and mention of the grant of the patent: **17.08.2016**
(21) Application number: 03760328.9
(22) Date of filing: 13.06.2003
(51) Int. Cl.: B61D 5/02, B61D 5/06

(54) **METHOD AND APPARATUS FOR MOUNTING A FLUID CONTAINMENT CYLINDER**
VERFAHREN UND VORRICHTUNG ZUR MONTAGE EINER FLUIDLAGERUNGSFLASCHE
PROCEDE ET APPAREIL DE MONTAGE D'UN CYLINDRE DE CONFINEMENT DE FLUIDE

(30) Priority: 14.06.2002 US 388991 P
(43) Date of publication of application: 16.03.2005
(73) Proprietor: Hexagon Technology AS, 6001 Alesund (NO)
(72) Inventor: EIHUSEN, J. A., Lincoln, NE 68512-9592 (US); NEWHOUSE, Norm, Lincoln, NE 68516 (US)
(74) Representative: Leonhard, Frank Reimund
(86) International application number: PCT/US2003/018683
(87) International publication number: WO 2003/106272

(56) References cited:
- WO-A-99/42707
- WO-A1-96/05117
- GB-A- 1 538 434
- JP-A- 8 282 309
- JP-A- 8 282 720
- JP-A- 2000 304 161
- JP-A- 2001 018 789
- US-A- 2 380 562
- US-A- 2 761 397
- US-A- 3 653 624
- US-A- 3 700 200
- US-A- 3 957 183
- US-A- 4 183 122
- US-A- 4 407 050
- US-A- 5 040 933
- US-A- 5 186 324
- US-A- 5 515 997
- US-A- 5 954 305
- US-B1- 6 234 541

## Description

This application claims priority to United States Provisional Patent Application Serial No. 60/388,911, filed June 14, 2002.

### BACKGROUND OF THE INVENTION

The present invention relates generally to fluid storage, and specifically to a method and apparatus for mounting a fluid containment vessel, as disclosed e.g. in document US 6,234,541.

In many applications, the qualities of lightweight construction and high resistance to fragmentation and corrosion damage are highly desirable characteristics for a pressure vessel. These design criteria have been met for many years by the development of high pressure composite (fiber reinforced resin matrix) containers; for instance, containers fabricated of laminated layers of wound fiberglass filaments or various types of other synthetic filaments which are bonded together by a thermal-setting or thermoplastic resin. An elastomeric or other non-metal resilient liner or bladder often is disposed within the composite shell to seal the vessel and prevent internal fluids from contacting the composite material.

Such composite vessels have become commonly used for containing a variety of fluids under pressure, such as storing oxygen, natural gas, nitrogen, rocket or other fuel, propane, etc. The composite construction of the vessels provides numerous advantages such as lightness in weight and resistance to corrosion, fatigue and catastrophic failure. These attributes are due to the high specific strengths of the reinforcing fibers or filaments that typically are oriented in the direction of the principal forces in the construction of the pressure vessels.

Composite pressure vessels of the character described above originally were developed for aircraft and aerospace applications primarily because of the critical weight restrictions in such vehicles. As compressed natural gas (CNG) has become more widely used in ground-based vehicles such as buses and cars, however, the composite pressure vessel has become more widely used in such vehicles as well.

The structural requirements of a pressure vessel are such that a generally-cylindrical shape having rounded ends is a highly-desirable form factor from a standpoint of both strength and packing efficiency. Unfortunately, the rounded shape can make securing such a pressure vessel to the vehicle difficult.

The neck of the compressed gas cylinder provides a structural protrusion suitable for attachment by a collar or similar device. Certain known designs make use of this feature to secure a gas cylinder. Unfortunately, such designs suffer from a number of drawbacks. Certain designs handle misalignment poorly, and can place substantial stresses on the neck structure in the event of misalignment. Certain designs inadequately secure the neck, so that there is an unacceptable risk that the cylinder might work itself free under the right conditions. Finally, certain designs are such that the cylinder can rotate about the principal axis of the cylinder, thereby placing stress on the connection lines or other attached hardware.

### SUMMARY OF THE INVENTION

The vessel securement method and apparatus disclosed herein provides a unique combination of structures suitable for safely securing a pressure vessel under a variety of conditions. Using the teachings of the present invention, one of skill in the art will be able to readily construct a pressure vessel mounting scheme suitable for securely fastening a pressure vessel against axial and rotational movement. Further, the teachings of the present invention are suitable for construction of pressure vessel mounting structures able to accommodate a substantial degree of misalignment without unduly stressing the neck of the pressure vessel.

In one embodiment, the present invention includes a compressed gas cylinder mount incorporating a frame having a top surface, a front surface, a back surface, a neck receiving bore passing through the frame from the front surface to the back surface, and a fastener bore passing through the frame from the top surface to the neck receiving bore. A fastener is disposed within the fastener bore, having a neck receiving end and a threaded end. The neck receiving end has an inner profile suitable for capturing the neck of a compressed gas cylinder. A nut, threadably engaged to the threaded end of the fastener, is used to tighten and secure the assembly.

In a second embodiment, the invention includes a frame having a neck receiving bore passing through the frame from its front surface to its back surface. The frame has a pair of fastener bores passing through the frame on either side of the neck receiving bore from the bottom surface to the top surface. The neck of the cylinder is secured by a u-bolt, having a neck receiving end and first and second threaded uprights, with each threaded upright disposed within one of the first and second fastener bores. A pair of nuts secure the assembly.

In a third embodiment, the invention includes a frame having a neck receiving bore passing through the frame from its front surface to its back surface and a fastener bore passing through the frame from its top surface to the neck receiving bore. A fastener is disposed within the fastener bore, having a neck receiving end and a threaded end. The neck receiving end has an inner profile suitable for capturing the neck of a compressed gas cylinder. A nut, threadably engaged to the threaded end of the fastener, secures the assembly.

In this embodiment, the rotational orientation of the cylinder is fixed using a locating collar disposed on the front surface of the frame around the neck receiving bore. The collar has a first locator receiving feature and a second locator receiving feature. A first locator, disposed in the front surface of the frame, is mated to the first locator receiving feature. A second locator is disposed within the second locator receiving feature and a neck locating feature.

In a fourth embodiment, the present invention includes a frame having a neck receiving bore passing through the frame from the front surface to the back surface and a spherical inner surface disposed around the neck receiving bore. A spherical bearing, having a spherical outer surface and a cylindrical inner surface, is disposed at least partly within the spherical inner surface of the frame. A retainer, having a spherical inner surface, is disposed against the spherical bearing opposite the mount and secured to the mount, thereby capturing the spherical bearing.

### BRIEF DESCRIPTION OF THE DRAWINGS

For more complete understanding of the features and advantages of the present invention, reference is now made to the detailed description of the invention along with the accompanying figures, in which:
Figure 1 depicts an isometric view of a compressed gas cylinder and mount assembly according to one embodiment of the present invention;
Figure 2 depicts an exploded isometric view of the compressed gas cylinder and mount assembly of Figure 1;
Figure 3 depicts a front section view of the compressed gas cylinder and mount assembly of Figures 1 and 2 taken along line 3-3 of Figure 2;
Figure 4 depicts a bottom section view of a cylinder frame according to certain embodiments of the present invention;
Figure 5 depicts an isometric view of a compressed gas cylinder and mount assembly according to a second embodiment of the present invention;
Figure 6 depicts an exploded isometric view of the compressed gas cylinder of Figure 5;
Figure 7 depicts an isometric view of a compressed gas cylinder and mount assembly according to a third embodiment of the present invention;
Figure 8 depicts an exploded isometric view of the assembly of Figure 7;
Figure 9 depicts a side section view of the assembly of Figures 7 and 8 taken along line 9-9 of Figure 7;
Figure 10 depicts a section isometric view of a compressed gas cylinder and mount assembly according to a fourth embodiment of the present invention; and
Figure 11 depicts a section isometric view of a compressed gas cylinder and mount assembly according to a fifth embodiment of the present invention.

### DETAILED DESCRIPTION OF THE INVENTION

While the making and using of various embodiments of the present invention are discussed in detail below, it should be appreciated that the present invention provides many applicable inventive concepts that may be embodied in a wide variety of specific contexts. The specific embodiments discussed herein are merely illustrative of specific ways to make and use the invention and do not delimit the scope of the invention. Various modifications and combinations of the illustrative embodiments, as well as other embodiments of the invention, will be apparent to persons skilled in the art upon reference to the description. It is therefore intended that the appended claims encompass any such modifications or embodiments.

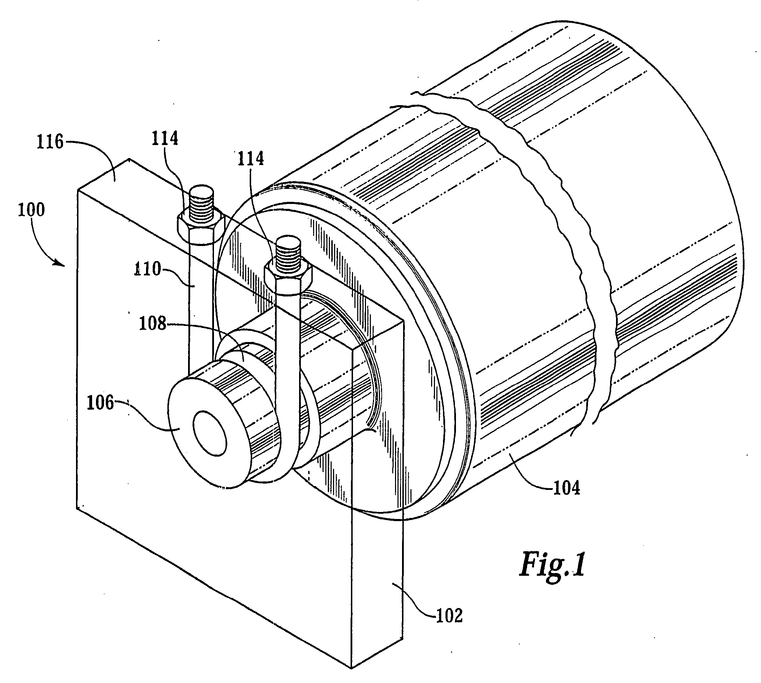

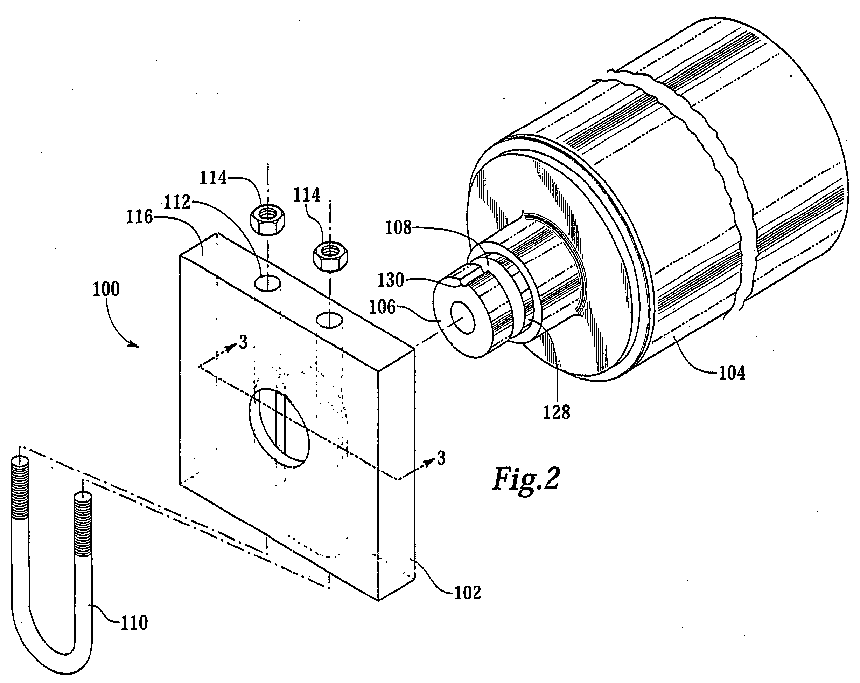

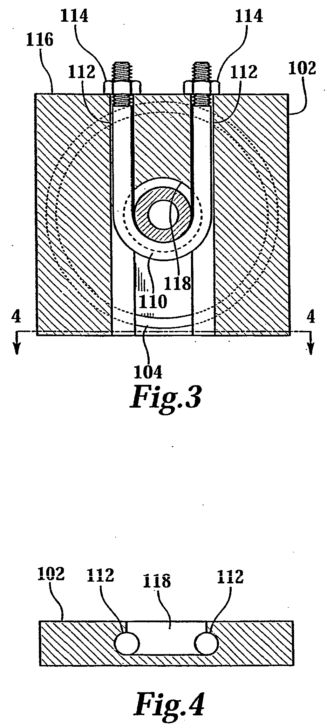

As seen in Figures 1-4, cylinder and mount assembly 100 includes a frame 102 designed to receive a cylinder 104 by the neck 106 of cylinder 104. In this embodiment, the frame 102 captures neck 106 and fixes it in its axial position by registering against an annular groove 108 in the neck 106. The securement is accomplished by a fastener 110, which may be a u-bolt, as shown in Figures 1-4. Those of skill in the art will have knowledge of other suitable fasteners. As examples, a j-bolt, an eye-bolt, or a square bend u-bolt could be used in place of the u-bolt shown in Figures 1-4 without departing from the spirit and scope of the present invention. The fastener 110 could be a plate or subframe, or even a band or strap. As noted, these fastening solutions, and many others, will be known to those of skill in the art.

In the embodiment shown in Figures 1-4, the fastener 110 is held in place by one or more nuts 114 threadably engaged to one or more threaded portions of fastener 110. As with the type of fastener 110 employed, although a threaded fastener may be preferred for certain embodiments, there is nothing within the spirit and scope of the present invention limiting the fastener 110 to threaded fasteners. Locking pins, elastomeric materials, or friction-based securement mechanisms could be employed. The securement mechanism could make use of plastic deformation of the fastener, or even welding or adhesive bonding of the fastener 110 to the frame 102, particularly in applications wherein the cylinder 102 is installed permanently. Each of these mechanisms, and many others, are within the spirit and scope of the present invention, as will be appreciated by those of skill in the art. In many applications, it will be necessary that the fastener 110 incorporate some form of tensioning mechanism similar to the operation of the nuts 114 on the threads of the u-bolt in order to solidly secure the neck 106 of the tank 104.

The design of frame 102 may vary from one application to another. In the embodiment shown in Figures 1-4, the frame 102 has a generally box-like shape, having front, back, top, bottom, and side surfaces. Other shapes will be suitable, depending on application. Frame 102 of Figures 1-4 receives neck 106 of cylinder 104 through neck receiving bore 118.

The fastener 110 passes through fastener bores 112 to the top surface 116 of the frame 102. As the fastener 110 is tightened against the neck 106 using nuts 114, the upper surface of the neck 106 is forced against the upper surface of neck receiving bore 118, thereby securing cylinder 104.

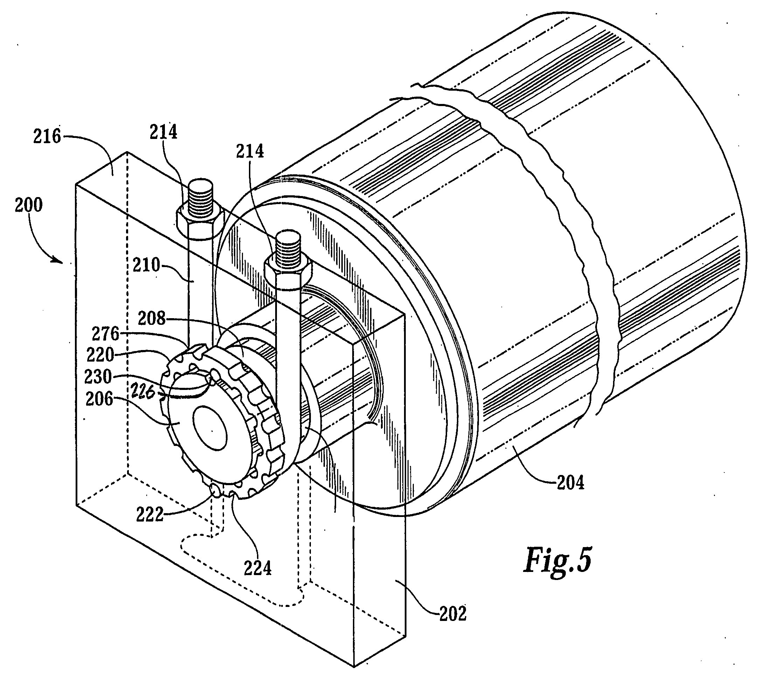

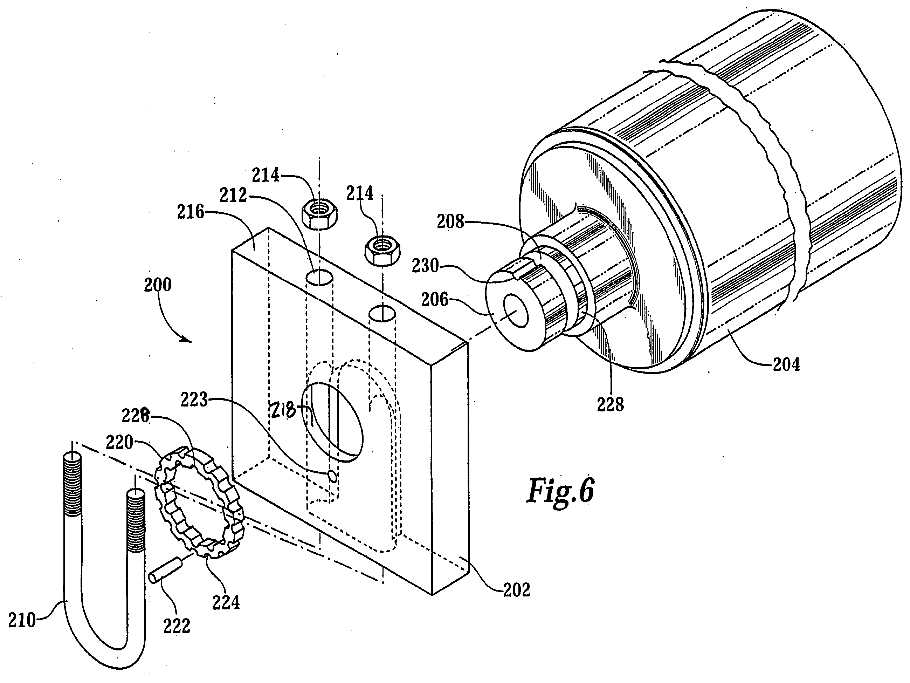

Figure 5 depicts an isometric view of a compressed gas cylinder and mount assembly according to a second embodiment of the present invention. Figure 6 depicts an exploded isometric view of the assembly of Figure 5. As seen in Figures 5 and 6, cylinder and mount assembly 200 includes a frame 202 designed to receive a cylinder 204 by the neck 206 of cylinder 204. In this embodiment, the frame 202 captures neck 206 and fixes it in its axial position by registering against an annular groove 208 in the neck 206. The securement is accomplished by a fastener 210, which may be a u-bolt, as shown in Figure 5. Those of skill in the art will have knowledge of other suitable fasteners, including but not limited to the fasteners specifically described above in connection with fastener 110. In this embodiment, the fastener 210 is held in place by one or more nuts 214 threadably engaged to one or more threaded portions of fastener 210. As with fastener 110, there is nothing within the spirit and scope of the present invention requiring that fastener 210 be a threaded fastener.

The design of frame 202 may vary from one application to another. In the embodiment shown in Figures 5 and 6, the frame 202 has a generally box-like shape, having front, back, top, bottom, and side surfaces. Other shapes will be suitable, depending on application. Frame 202 of Figure 5 receives neck 206 of cylinder 204 through neck receiving bore 218.

The fastener 210 passes through fastener bores 212 to the top surface 216 of the frame 202. As the fastener 210 is tightened against the neck 206 using nuts 214, the upper surface of the neck 206 is forced against the upper surface of neck receiving bore 218, thereby securing cylinder 204.

In addition to the mounting structures described above in connection with Figures 5 and 6, which are largely identical to the structures described above in connection with Figures 1-4, assembly 200 incorporates additional structures for securing cylinder 204 in its rotational orientation. Specifically, assembly 200 incorporates a location collar 220 designed to fix the rotational orientation of the neck 206 to that of the frame 202.

In operation, the location collar 220 is disposed about the neck 206 and fixed in its rotational orientation by first locator 222 registering against one of the location grooves 224 in the location collar 220 as well as a locating feature in the frame 202. In the embodiment depicted in Figure 5, the first locator 222 is a pin disposed within a pin bore 223 in the frame 202, but those of skill in the art will appreciate that a wide variety of structures and mechanisms may be suitable for this purpose.

With the rotational orientation of the location collar 220 fixed by the first locator 222, the rotational orientation of the neck 206, and therefore the tank 204, can be fixed by locating the neck 206 to the location collar 220. This task is accomplished by second locator 226, which locates the neck 206 using one of collar-to-neck location grooves 228 and neck axial groove 230 in the neck 206 of the tank 204.

In the embodiment shown in Figures 5 and 6, the second locator 226 is a pin, but those of skill in the art will recognize that a number of structures are suitable for use in this application. Further, although the locating features shown in Figures 5 and 6 are grooves 224, 228 and 230, those of skill in the art will appreciate that locating holes would work in a similar manner, particularly with respect to collar locating grooves 224.

In certain embodiments, the spacing of the locating grooves 224 and 228 are such that the orientation of the cylinder 204 can be adjusted with a relatively high degree of precision even with a relatively small number of locating grooves. In one embodiment, the pattern of inner and outer grooves 224 and 228 is such that the cylinder 204 can be fixed in place at any point around a 360-degree angle to a precision of one degree.

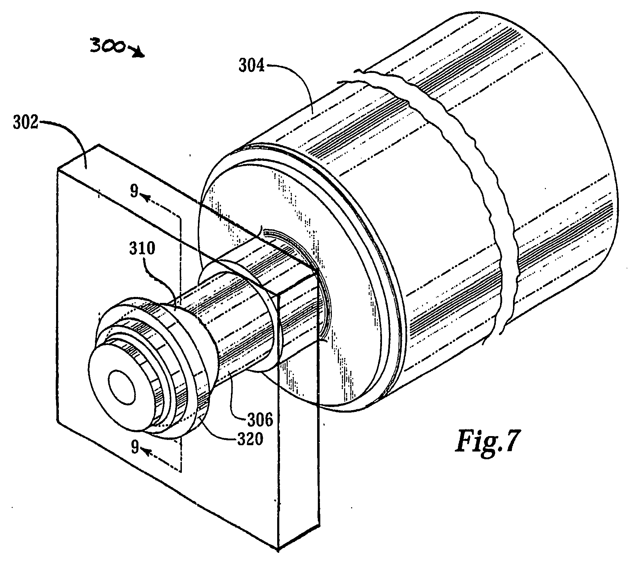

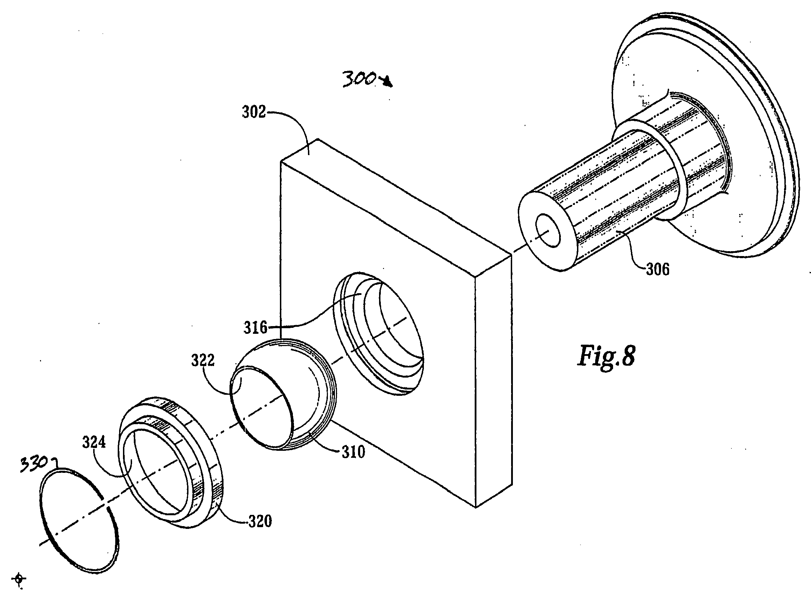

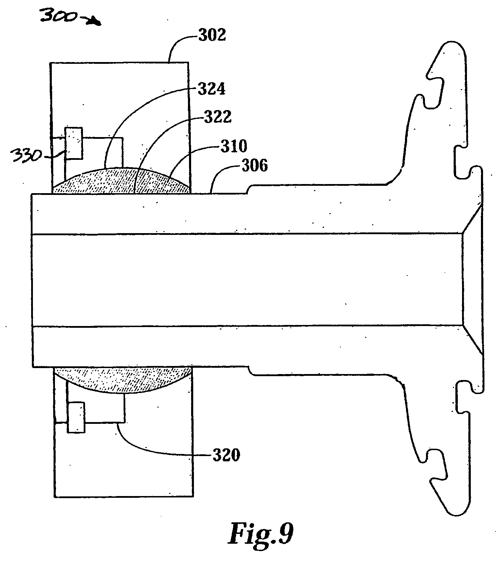

Cylinder and frame assembly 300, shown in Figures 7-9, differs from the embodiments shown in Figures 1-4 in the use of a spherical bearing 310 in place of the fastener 110 shown and described in those figures. Spherical bearing 310 is disposed around the outer surface of neck 306. The inner surface 322 of spherical bearing is shaped to mate with the outer surface of the neck 306. In the embodiment shown in Figures 7, 8 and 9, the inner surface 322 is cylindrical, in order to conform to the cylindrical shape of the neck 306. Depending on application, spherical bearing 310 may be either fixed or slidable on neck 306. A slidable design would have the advantage of providing the highest degree of compliance to misalignment, while a fixed design would have the advantage of holding the cylinder more securely. As assembled, spherical bearing 310 seats against a spherical inner surface 316 in the frame 302. The spherical bearing 310 is captured within frame 302 by securing collar 320. Securing collar 320 may have a spherical inner surface 324 shaped to seat with the outer surface of spherical bearing 310. Securing collar 320 may be retained within frame 302 by a number of methods. In the embodiment shown in Figures 7-9, securing collar is retained by snap ring 330, but other methods of securement, including but not limited to a threaded engagement, may be employed.

Using this arrangement, a certain degree of axial misalignment can be tolerated by the assembly without placing potentially harmful stresses on the neck 306 of the cylinder 304. In certain embodiments, assembly 300 may incorporate one or more features similar to locating collar 220, described above, to fix the rotational location of the cylinder 304 while still allowing for a certain degree of misalignment.

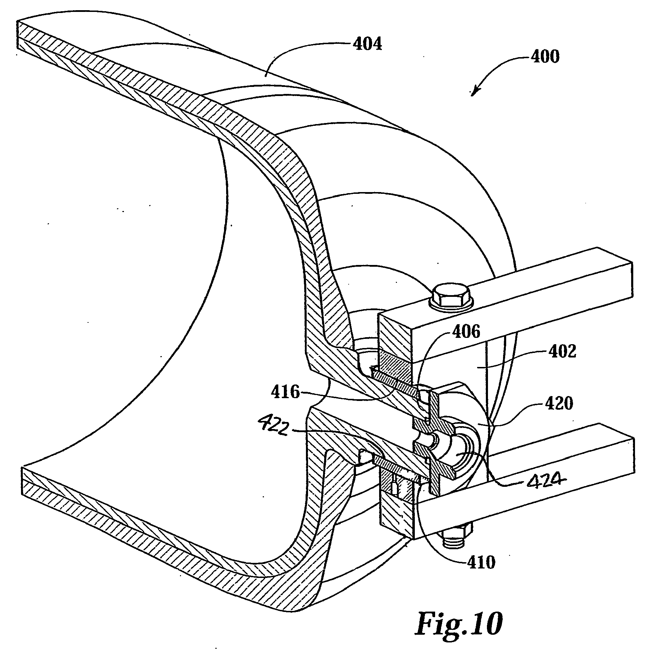

Figure 10 depicts an isometric sectional view of a compressed gas cylinder and mount assembly 400 according to a fourth embodiment of the present invention. Cylinder and frame assembly 400 makes use of a cylindrical bearing 410. Cylindrical bearing 410 is disposed around the outer surface of neck 406. The inner surface 422 of cylindrical bearing 410 is shaped and sized to mate with the outer surface of the neck 406.

In the embodiment shown in Figure 10, the inner surface 422 is cylindrical, in order to conform to the cylindrical shape of the neck 406. Cylindrical bearing 410 is slidable on neck 406. As assembled, cylindrical bearing 410 seats against a cylindrical inner surface 416 in the frame 402. With this arrangement, the cylindrical bearing 410 is captured within frame 402 by securement plug 420, but is otherwise free to slide axially within frame 402. Depending on the specific application, securement plug 420 may be secured to neck 406 by a variety of structures, including a threaded connection, a snap fit, a press fit or any other method known to those of skill in the art. In the embodiment shown in Figure 10, securement plug 420 incorporates a fill port 424 for filling and evacuation of gas cylinder 404.

Those of skill in the art will appreciate that, although this design allows for a substantial degree of axial translation, it allows for only a very limited degree of axial misalignment. Where axial alignment is a concern, the incorporation of a spherical bearing may be advisable. In certain embodiments, assembly 400 may also incorporate one or more features similar to locating collar 220, described above, to fix the rotational location of the cylinder 404 while still allowing for a certain degree of misalignment.

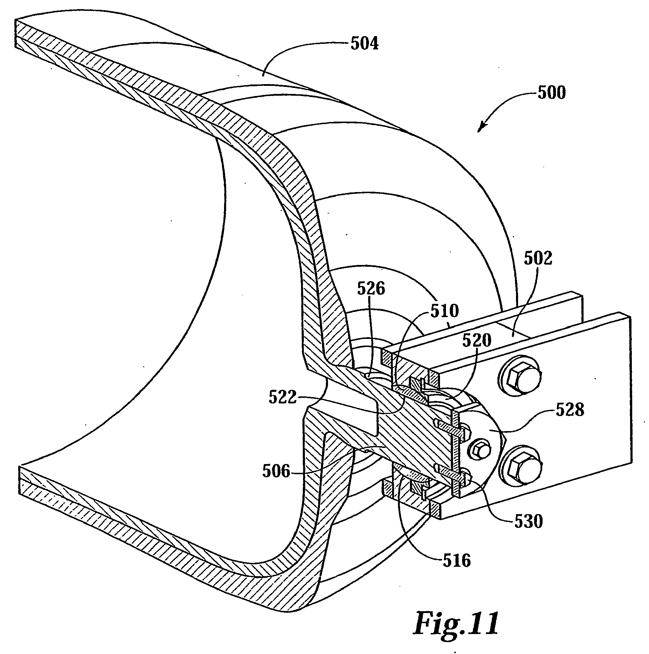

Cylinder and frame assembly 500, depicted in Figure 11, makes use of a combination spherical/cylindrical bearing 510. Spherical/cylindrical bearing 510 is disposed around the outer surface of neck 506. The inner surface 522 of spherical/cylindrical bearing 510 is shaped and sized to mate with the outer surface of the neck 506. In the embodiment shown in Figure 11, the inner surface 522 is cylindrical, in order to conform to the cylindrical shape of the neck 506.

Spherical/cylindrical bearing 510 is slidable on neck 506. As assembled, spherical/cylindrical bearing 510 seats against a spherical inner surface 516 in the frame 502. With this arrangement, the spherical/cylindrical bearing 510 is captured within frame 502 by retainer 520, but has a certain freedom of orientation within frame 502. Similarly, neck 506 has a certain degree of freedom of movement in axial displacement within spherical/cylindrical bearing 510, with such axial displacement being bounded on the one end by shoulder 526 and at the other end by retaining plate 528.

Depending on the specific application, retaining plate 528 may be secured to neck 506 by a variety of structures, including a threaded connection, a snap fit, a press fit or any other method known to those of skill in the art. In the embodiment shown in Figure 11, retaining plate 528 is secured to neck 506 by a set of threaded fasteners 530.

Those of skill in the art will appreciate that, this design allows for a substantial degree of axial translation, as well as a substantial degree of axial misalignment. In certain embodiments, assembly 500 may also incorporate one or more features similar to locating collar 220, described above, to fix the rotational location of the cylinder 504 while still allowing for a certain degree of misalignment.

While this invention has been described in reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. **Fluid containment cylinder mount** comprising
(i) a frame (102,202) having a top surface, a front surface, a back surface, a neck receiving bore (118, 218) passing through the frame from the front surface to the back surface having a principal axis, and at least one fastener bore (112,212) passing through the frame from the top surface to at least the neck bore (118,218);
(ii) a fastener (110,210), disposed at least partly within the fastener bore, having a neck securement end and at least one tensionable end, the neck securement end having an inner profile having a portion shaped to mate with at least a portion of a neck (106,206) of a fluid containment cylinder (104,204);
(iii) a tensioner, engaged to at least one tensionable end of the fastener.

2. Mounting arrangement of claim 1, wherein the fastener is a u-bolt.

3. Mounting arrangement of claim 2, wherein the u-bolt includes at least one tensionable end having a thread (110a) disposed thereon.

4. Mount of claim 3, wherein the tensioner is a nut (114,214).

5. Mount of claim 1, wherein the fastener bore (112,212) is disposed substantially orthogonally to the axis of the neck bore (118,218).

6. Mount of claim 1 or 5, wherein the neck bore (118,218) is substantially cylindrical.

7. Mount of claim 1, wherein the axis of the neck bore (118,218) is disposed orthogonally to the front surface and/or the back surface.

8. **Fluid containment cylinder mount arrangement** comprising
- a frame (102,202) having a top surface, a bottom surface, a front surface, a back surface, a neck receiving bore (118,218) passing through the frame from the front surface to the back surface, a first fastener bore (112,212) passing through the frame from the bottom surface to the top surface along a first side of the neck receiving bore, and a second fastener bore (112,212) passing through the frame from the bottom surface to the top surface along a second side of the neck receiving bore opposite the first side;
- a u-bolt (210) having a neck receiving end and first and second threaded (110a) uprights, each threaded upright disposed within one of the first and second fastener bores (212), the neck receiving end having a radius sized to capture a neck (206,106) of a compressed gas cylinder (104,204);
- a first nut (114,214), thereadably engaged to the first threaded upright;
- a second nut (114,214), threadably engaged to the second threaded upright.

9. Arrangement of claim 8, wherein one or both fastener bores (212,112) are disposed substantially orthogonally to the axis of the neck bore (118,218).

10. Arrangement of claim 8 or 9, wherein the neck bore is substantially cylindrical.

11. Arrangement of claim 8, wherein the axis of the neck bore (118,218) is disposed orthogonally to the front surface and/or the back surface of the frame (102,202).

12. **Compressed gas cylinder mount,** comprising:
a frame (202) having a top surface, a front surface, a back surface, a neck receiving bore (208) passing through the frame from the front surface to the back surface, and at least one fastener bore (212) passing through the frame from the top surface to the neck bore;
a fastener (210), disposed within the fastener bore, having a neck receiving end and a tensionable end, the neck receiving end having an inner profile suitable for capturing a neck of a compressed gas cylinder (204);
a tensioner (214), engaged to the tensionable end of the fastener;
a locating collar (220), disposed on the front surface of the frame around the neck receiving bore, having a first locator (222) receiving feature (224) and a second locator receiving feature (228);
a first locator (222), disposed in the front surface of the frame, mated to the first locator receiving feature (224);
a second locator, disposed in the second locator receiving feature (228), and shaped to mate with a locating feature (230) on a compressed gas cylinder neck (204,206).

13. Mount of claim 12, wherein the fastener is a u-bolt (210).

14. Mount of claim 13, wherein the u-bolt includes at least one tensionable end (110a) having a thread disposed thereon.

15. Mount of claim 14, wherein the tensioner is a nut (114).

16. Mount of claim 12, wherein the fastener bore (212) is disposed substantially orthogonally to the axis of the neck bore (218).

17. Mount of claim 12 or 16, wherein the neck bore is substantially cylindrical.

18. Mount of claim 12, wherein the axis of the neck bore (218) is disposed orthogonally to one or more of the front surface and the back surface.

19. **Fluid container mount** comprising:
(i) a frame (302,402,502) having a top surface, a front surface, a back surface, a neck receiving bore passing through the frame from the front surface to the back surface, and a preferably spherical inner surface (316) disposed around the neck receiving bore;
(ii) a bearing (310), having an outer surface and a cylindrical inner surface (322), disposed at least partly within the inner surface (316) of the frame;
(iii) a retainer (320), having an inner surface, disposed against the bearing opposite a mounted cylinder (304) and secured to the frame.

20. Mount of claim 19, the bearing (310) being spherical and the inner surface also being spherical.

21. Mount of claims 20 or 19, the retainer bearing surface (324) being spherical.

## Patentansprüche

1. **Befestigung** für einen Flüssigkeitssicherheitszylinder, umfassend ...
(i) einen Rahmen (102, 202) mit einer oberen Oberfläche, einer vorderen Oberfläche, einer hinteren Oberfläche, einer Bohrung (118, 218) zur Aufnahme eines Halses, die sich durch den Rahmen von der vorderen Oberfläche zu der hinteren Oberfläche erstreckt, und wenigstens einem Befestigungsloch (112, 212), das sich durch den Rahmen von der oberen Oberfläche bis zu wenigstens der Halsbohrung (118, 218) erstreckt;
(ii) einen Befestiger (110, 210), der zumindest teilweise innerhalb des Befestigungslochs angeordnet ist, mit einem Halssicherungsende und wenigstens einem spannbaren Ende, wobei das Halssicherungsende ein inneres Profil mit einem Bereich umfasst, der geformt oder ausgebildet ist, wenigstens einem Bereich des Halses (106, 206) eines Sicherheitszylinders für Flüssigkeiten zu entsprechen;
(iii) einen Spanner, der mit wenigstens einem spannbaren Ende des Befestigers in einem Eingriff ist.

2. Befestigungsanordnung nach Anspruch 1, wobei der Befestiger ein U-Riegel ist.

3. Befestigungsanordnung nach Anspruch 2, wobei der U-Riegel wenigstens ein spannbares Ende mit einem daran angeordneten Gewinde (110a) umfasst.

4. Befestigung nach Anspruch 3, wobei der Spanner eine Mutter (114, 214) ist.

5. Befestigung nach Anspruch 1, wobei das Befestigungsloch (112, 212) im Wesentlichen orthogonal zu der Achse der Halsbohrung (118, 218) angeordnet ist.

6. Befestigung nach Anspruch 1 oder 5, wobei die Halsbohrung (118, 218) im Wesentlichen zylindrisch ist.

7. Befestigung nach Anspruch 1, wobei die Achse der Halsbohrung (118, 218) orthogonal zur vorderen Oberfläche und/oder zur hinteren Oberfläche angeordnet ist.

8. **Befestigungsanordnung** für einen Flüssigkeits-Sicherheitszylinder, umfassend
- einen Rahmen (102, 202) mit einer oberen Oberfläche, einer unteren Oberfläche, einer vorderen Oberfläche, einer hinteren Oberfläche, einer Bohrung (118, 218) zur Aufnahme eines Halses, die sich durch den Rahmen von der vorderen Oberfläche zu der hinteren Oberfläche erstreckt, einem ersten Befestigungsloch (112, 212), das sich durch den Rahmen von der unteren Oberfläche zu der oberen Oberfläche entlang einer ersten Seite der Halsaufnahmebohrung erstreckt, und einem zweiten Befestigungsloch (112, 212), das sich von der unteren Oberfläche zu der oberen Oberfläche entlang einer zweiten Seite der Halsaufnahmebohrung erstreckt, die der ersten Seite gegenüber liegt;
- einen U-Riegel (210) mit einem den Hals aufnehmenden Ende und einem erste und einem zweiten Gewindebolzen (110a), wobei jeder Gewindebolzen innerhalb einer der ersten und zweiten Befestigungslöcher (212) angeordnet ist, das Halsaufnahmeende einen Radius hat, der so bemessen ist, einen Hals (206, 206) eines Zylinders für verdichtetes Gas (104, 204) zu fassen;
- eine erste Mutter (114, 214), die auf den ersten Gewindebolzen aufgeschraubt ist;
- einer zweiten Mutter (114, 214), die auf den zweiten Gewindebolzen aufgeschraubt ist.

9. Anordnung nach Anspruch 8, wobei eines oder beide Befestigungslöcher (212, 112) im Wesentlichen orthogonal zur Halsbohrung (118, 218) angeordnet sind.

10. Anordnung nach Anspruch 8 oder 9, wobei die Halsbohrung im Wesentlichen zylindrisch ist.

11. Anordnung nach Anspruch 8, wobei die Achse der Halsbohrung (118, 218) orthogonal zu der vorderen Oberfläche und/oder zu der hinteren Oberfläche des Rahmens (102, 202) angeordnet ist.

12. **Befestigung** für einen Zylinder für komprimiertes Gas, umfassend
(i) einen Rahmen (202) mit einer oberen Oberfläche, einer vorderen Oberfläche, einer hinteren Oberfläche, einer HalsaufnahmeBohrung (218), die sich durch den Rahmen von der vorderen Oberfläche zu der hinteren Oberfläche erstreckt, und wenigstens einem Befestigungsloch (112, 212), das sich durch den Rahmen von der oberen Oberfläche bis zu wenigstens der Halsbohrung (118, 218) erstreckt;
(ii) einen Befestiger (210), der innerhalb des Befestigungslochs angeordnet ist, mit einem Halsaufnahmeende und einem spannbaren Ende, wobei das Halsaufnahmeende ein inneres Profil umfasst, das geeignet ist, den Hals eines Zylinders (204) für komprimiertes Gas zu fassen;
(iii) einen Spanner (214), der mit dem spannbaren Ende des Befestigers in Eingriff ist;
(iv) einen Positionskragen (220), der an der vorderen Oberfläche des Rahmens rund um die Halsaufnahmebohrung angeordnet ist, mit einem Aufnahmemittel (228) für einen ersten Positionierer (222) und einem zweiten Positionierer-Aufnahmemittel (228);
(v) einen ersten Positionierer (222), der in der vorderen Oberfläche des Rahmens angeordnet ist und an das erste PositioniererAufnahmemittel (224) angepasst ist;
(vi) einen zweiten Positionierer, der in dem zweiten Positioniereraufnahmemittel (228) angeordnet und so geformt ist, dass er an ein Positionierungsmittel (230) an dem Hals (204, 206) eines Zylinders für komprimiertes Gas angepasst ist.

13. Befestigung nach Anspruch 12, wobei der Befestiger ein U-Riegel (210) ist.

14. Befestigung nach Anspruch 13, wobei der U-Riegel wenigstens ein spannbares Ende mit einem daran angeordneten Gewinde (110a) umfasst.

15. Befestigung nach Anspruch 14, wobei der Spanner eine Mutter (114) ist.

16. Befestigung nach Anspruch 12, wobei das Befestigungsloch (212) im Wesentlichen orthogonal zu der Achse der Halsbohrung (218) angeordnet ist.

17. Befestigung nach Anspruch 12 oder 16, wobei die Halsbohrung im Wesentlichen zylindrisch ist.

18. Befestigung nach Anspruch 12, wobei die Achse der Halsbohrung (218) orthogonal zu einer oder mehr aus der vorderen Oberfläche und der hinteren Oberfläche angeordnet ist.

19. **Befestigung** für einen Flüssigkeitsbehälter, umfassend
(i) einen Rahmen (302,402, 502) mit einer oberen Oberfläche, einer vorderen Oberfläche, einer hinteren Oberfläche, einer Halsaufnahmebohrung, die sich durch den Rahmen von der vorderen Oberfläche bis zur hinteren Oberfläche erstreckt, und einer bevorzugt sphärischen inneren Oberfläche (316), die rund um die Halsaufnahmebohrung angeordnet ist;
(ii) ein Lager (310) mit einer äußeren Oberfläche und einer zylindrischen inneren Oberfläche (322), die zumindest teilweise in der inneren Oberfläche (316) des Rahmens angeordnet ist;
(iii) einen Halter (230) mit einer inneren Oberfläche, die gegenüber einem befestigten Zylinder (304) an dem Lager angeordnet und an dem Rahmen gesichert ist.

20. Befestigung nach Anspruch 19, wobei das Lager (310) sphärisch ist und die innere Oberfläche auch sphärisch ist.

21. Befestigung nach Anspruch 20 oder 19, wobei die Halterlager-Oberfläche (324) sphärisch ist.

## Revendications

1. **Montage de cylindre de confinement de fluide,** comprenant:
(i) un bâti (102, 202) présentant une surface supérieure, une surface avant, une surface arrière, un alésage de réception de col (118, 218) qui passe à travers le bâti à partir de la surface avant jusqu'à la surface arrière présentant un axe principal, et au moins un alésage d'élément de fixation (112, 212) qui passe à travers le bâti à partir de la surface supérieure jusqu'audit au moins un alésage de col (118, 218);
(ii) un élément de fixation (210, 210), disposé au moins partiellement à l'intérieur de l'alésage d'élément de fixation, présentant une extrémité de fixation de col et au moins une extrémité pouvant être tendue, l'extrémité de fixation de col présentant un profil intérieur comprenant une partie configurée de manière à se coupler à au moins une partie d'un col (106, 206) d'un cylindre de confinement de fluide (104, 204);
(iii) un élément d'application de tension, engagé sur au moins une extrémité pouvant être tendue de l'élément de fixation.

2. Agencement de montage selon la revendication 1, dans lequel l'élément de fixation est un étrier.

3. Agencement de montage selon la revendication 2, dans lequel l'étrier présente au moins une extrémité pouvant être tendue comportant un filetage (110a) formé sur celle-ci.

4. Montage selon la revendication 3, dans lequel l'élément d'application de tension est un écrou (114, 214).

5. Montage selon la revendication 1, dans lequel l'alésage d'élément de fixation (112, 212) est disposé de façon sensiblement orthogonale à l'axe de l'alésage de col (118, 218).

6. Montage selon la revendication 1 ou 5, dans lequel l'alésage de col (118, 218) est sensiblement cylindrique.

7. Montage selon la revendication 1, dans lequel l'axe de l'alésage de col (118, 218) est disposé orthogonalement à la surface avant et/ou à la surface arrière.

8. **Agencement de montage de cylindre de confinement de fluide,** comprenant:
- un bâti (102, 202) présentant une surface supérieure, une surface inférieure, une surface avant, une surface arrière, un alésage de réception de col (118, 218) qui passe à travers le bâti à partir de la surface avant jusqu'à la surface arrière, un premier alésage d'élément de fixation (112, 212) qui passe à travers le bâti à partir de la surface inférieure jusqu'à la surface supérieure le long d'un premier côté de l'alésage de réception de col, et un deuxième alésage d'élément de fixation (112, 212) qui passe à traves le bâti à partir de la surface intérieure jusqu'à la surface supérieure le long d'un deuxième côté de l'alésage de réception de col opposé au premier côté;
- un étrier (210) présentant une extrémité de réception de col et des premier et deuxième montants filetés (110a), chaque montant fileté étant disposé à l'intérieur de l'un des premier et deuxième alésages d'élément de fixation (212), l'extrémité de réception de col présentant un rayon dimensionné de manière à capturer un col (206, 106) d'un cylindre à gaz comprimé (104, 204);
- un premier écrou (114, 214) engagé de façon vissée sur le premier montant fileté;
- un deuxième écrou (114, 214) engagé de façon vissée sur le deuxième montant fileté.

9. Agencement selon la revendication 8, dans lequel un ou chacun des deux alésages d'élément de fixation (212,112) est disposé de façon sensiblement orthogonale à l'axe de l'alésage de col (118, 218).

10. Agencement selon la revendication 8 ou 9, dans lequel l'alésage de col est sensiblement cylindrique.

11. Agencement selon la revendication 8, dans lequel l'axe de l'alésage de col (118, 218) est disposé orthogonalement à la surface avant et/ou à la surface arrière du bâti (102, 202).

12. **Montage de cylindre à gaz comprimé,** comprenant:
- un bâti (202) présentant une surface supérieure, une surface avant, une surface arrière, un alésage de réception de col (208) qui passe à travers le bâti à partir de la surface avant jusqu'à la surface arrière, et au moins un alésage d'élément de fixation (212) qui passe à travers le bâti à partir de la surface supérieure jusqu'à l'alésage de col;
- un élément de fixation (210), disposé à l'intérieur de l'alésage d'élément de fixation, présentant une extrémité de réception de col et une extrémité pouvant être tendue, l'extrémité de réception de col présentant un profil intérieur approprié pour capturer un col d'un cylindre à gaz comprimé (204);
- un élément d'application de tension (214) qui est engagé sur l'extrémité pouvant être tendue de l'élément de fixation;
- un collier de positionnement (220), disposé sur la surface avant du bâti autour de l'alésage de réception de col, comprenant une première caractéristique de réception (224) de positionneur (222) et une deuxième caractéristique de réception de positionneur (228);
- un premier positionneur (222), disposé dans la surface avant du bâti, couplé à la première caractéristique de réception de positionneur (224); et
- un deuxième positionneur, disposé dans la deuxième caractéristique de réception de positionneur (228), et configuré de manière à être couplé à une caractéristique de positionnement (230) sur un col de cylindre à gaz comprimé (204,206).

13. Montage selon la revendication 12, dans lequel l'élément de fixation est un étrier (210).

14. Montage selon la revendication 13, dans lequel l'étrier présente au moins une extrémité pouvant être tendue (110a) comportant un filetage formé sur celle-ci.

15. Montage selon la revendication 14, dans lequel l'élément d'application de tension est un écrou (114).

16. Montage selon la revendication 12, dans lequel l'alésage d'élément de fixation (212) est disposé de façon sensiblement orthogonale à l'axe de l'alésage de col (218).

17. Montage selon la revendication 12 ou 16, dans lequel l'alésage de col est sensiblement cylindrique.

18. Montage selon la revendication 12, dans lequel l'axe de l'alésage de col (218) est disposé orthogonalement à une ou à chacune de la surface avant et de la surface arrière.

19. Montage de récipient de fluide, comprenant:
(i) un bâti (302, 402, 502) présentant une surface supérieure, une surface avant, une surface arrière, un alésage de réception de col qui passe à travers le bâti à partir de la surface avant jusqu'à la surface arrière, et une surface intérieure de préférence sphérique (316) qui est disposée autour de l'alésage de réception de col;
(ii) un palier (310), présentant une surface extérieure et une surface intérieure cylindrique (322), disposé au moins partiellement à l'intérieur de la surface intérieure (316) du bâti; et
(iii) un élément de retenue (320), présentant une surface intérieure, disposé contre le palier à l'opposé d'un cylindre monté (304) et fixé au bâti.

20. Montage selon la revendication 19, dans lequel le palier (310) est sphérique, et la surface intérieure est également sphérique.

21. Montage selon les revendications 20 ou 19, dans lequel la surface de palier de retenue (324) est sphérique.
